# EUROPÄISCHE PATENTSCHRIFT

(11) **EP 1 052 164 B1**
(45) Veröffentlichungstag und Bekanntmachung des Hinweises auf die Patenterteilung: **27.08.2003**
(21) Anmeldenummer: 00810325.1
(22) Anmeldetag: 14.04.2000
(51) Int. Cl.: B62D 29/04

(54) **Wandgruppe für PKW**
Wall group for automotive vehicle
Groupe de paroi pour véhicule automobile

(30) Priorität: 12.05.1999 CH 91499
(43) Veröffentlichungstag der Anmeldung: 15.11.2000
(73) Patentinhaber: Alcan Technology & Management AG, 8212 Neuhausen am Rheinfall (CH); Bayerische Motoren Werke Aktiengesellschaft, 80788 München (DE)
(72) Erfinder: Flemming, Torsten, 85244 Röhrmoos (DE); Fuchs, Horst Arno, 82319 Starnberg (DE); Götschi, Charles, 8559 Fruthwilen (CH); de Kalbermatten, Thibault, 9000 St. Gallen (CH)

(56) Entgegenhaltungen:
- EP-A- 0 670 257

## Beschreibung

Vorliegende Erfindung betrifft eine Wandgruppe für Personenkraftwagen (Pkw) gemäss dem Oberbegriff des Anspruchs 1, ein Verfahren zu deren Herstellung sowie deren Verwendung.

Die Automobilindustrie ist heute in der Karosserietechnik zunehmend bestrebt, leichtere und kostengünstigere Bauteile mit vergleichbaren oder verbesserten mechanischen Eigenschaften herzustellen. Dieser Entwicklung liegt die Zielsetzung eines verminderten Treibstoffverbrauches bzw. reduzierter Schadstoffemissionen, insbesondere von CO₂, zu Grunde. Weiters sieht sich die Automobilindustrie zur Sicherung ihrer Absatzmärkte gezwungen aufgrund staatlicher Vorschriften und Regulierungen wie beispielsweise Flottenverbrauchsvorschriften und Energiebesteuerung, eine neue Generation von Fahrzeugen mit niedrigem Treibstoffverbrauch zu entwickeln.

Die Entwicklungen im Karosseriebau führen deshalb tendenziell weg vom Werkstoff Stahl in Richtung Aluminium- und Kunststoffwerkstoffe. Während Aluminiumwerkstoffe bereits heute verbreitet auch in strukturell tragenden Bauteilen eingesetzt werden, liegt das Einsatzgebiet der Kunststoffe in der Regel vorwiegend im Bereich der strukturell nicht oder gering tragenden Bauteile wie beispielsweise Motorhauben, Kofferraumdeckel, Spoiler, Verkleidungen, Armaturenabdeckungen, etc.

Strukturell tragende Karosseriebauteile sind unter anderem die Seitenwandgruppen einer Fahrgastzelle von Pkw's. Solche Seitenwandgruppen, auch Seitenrahmen genannt, setzen sich in der Regel aus einer Vielzahl von Einzelteilen zusammen und umfassen beispielsweise A-, B-, C-, und D-Säule, Dachrahmen, Türschweller und Windfang. Seitenwandgruppen sind zumindest abschnittsweise strukturell tragende Bauteile. Sie werden deshalb auch heute noch vorwiegend in den Werkstoffen Stahl und/oder Aluminium gefertigt. Eine herkömmlich hergestellte komplette Seitenwandgruppe aus Metall kann beispielsweise aus 60 bis 70 Einzelteilen gefertigt sein, welche beispielsweise über Schweiss-, Niet-, Kleb- und/oder Schraubverbindungen in einem arbeitsintensiven Fertigungsprozess zum kompletten Seitenrahmen gefügt sind.

Im weiteren sind auch kleinere Seitenwandabschnitte von Seitenwandgruppen aus Kunststoff bekannt, die jedoch in ihrer Längsausdehnung maximal die A- und B-Säule umfassen. Diese Teile werden nach heutigem Stand der Technik in einem SMC (Sheet Moulding Compound)-Verfahren hergestellt. Sie sind, bedingt durch das Herstellungsverfahren, als Halbschalenelemente gefertigt und mittels Klebverbindung gegenseitig gefügt. Zur Erhöhung der Steifigkeit und der Festigkeit sind diese Kunststoffelemente im Schalenhohkaumbereich zusätzlich verrippt (Karosserietechnik, Horst Pippert, Vogel Buchverlag, 1998, S. 269). Solche Seitenrahmenelemente weisen den grossen Nachteil auf, dass sie mit ungerichteten Fasern verstärkt sind und arbeitsintensiv, teuer und vergleichsweise von hohem Gewicht und von beschränkter Festigkeit sind.

Seitenwandgruppen, welche Kunststoffwerkstoffe enthalten, werden oftmals in einer Mehrzahl von Verfahrensschritten in Handarbeit gefertigt. Dies betrifft insbesondere den Prototypbau solcher Seitenwandgruppen. Die genannten Bauteile sind vorwiegend mit Matten aus ungerichteten Fasern, wie Glasfasern, verstärkt und weisen in der Regel einen Faservolumengehalt von weniger als 30% auf. Derart hergestellte Bauteile weisen ein geringes Gewichteinsparungspotential auf und verfügen nicht über befriedigende Struktureigenschaften. Durch den hohen Anteil an Verfahrensschritten in Handarbeit ist die Reproduzierbarkeit solcher Teile und insbesondere die Reproduzierbarkeit ihrer Eigenschaften nicht gewährleistet. Solche Bauteile haben daher bis anhin keine Serienrelevanz erhalten und sind wirtschaftlich nicht umsetzbar.

Die Veröffentlichungsschrift EP 0 670 257 A1, die den Oberbegriff des Anspruche 1 und 10 zeigt, beschreibt ein Leichtbaufahrzeug mit einer selbsttragenden, aus einzelnen Elementen zusammengesetzten Karosserie aus faserverstärktem Kunststoff. Die einzelnen Karosserie-Elemente sind miteinander grossflächig auf Stoss verklebt.

Aufgabe vorliegender Erfindung ist es, eine Wandgruppe bereitzustellen, insbesondere eine Seitenwandgruppe, als tragendes Strukturbauteil von wesentlich geringerem Gewicht, die kostengünstig und auch in Serien, insbesondere Grossserien, mit geringen Produktionszeiten hergestellt werden kann.

Erfindungsgemäss wird die Aufgabe durch die Merkmale der Anspruche 1 und 10 gelöst.

Die nachfolgende Erfindungsbeschreibung bezieht sich auf Seitenwandgruppen. Die vorgenannten Erfindungsmerkmale und die Ausführungsvarianten sind jedoch allgemein auch auf Wandgruppen von Fahrgastzellen, beispielsweise auch für Heckklappen, von Pkw's anwendbar, soweit sie sich nicht auf spezifische Konstruktionsmerkmale der Seitenwandgruppe beziehen.

Die Seitenwandgruppe enthält wenigstens eine A-Säule sowie eine oder mehrere weitere Säulen, insbesondere B-Säule, C-Säule und/oder D-Säule. Im weiteren enthält die Seitenwandgruppe einen seitlichen Dachrahmen und einen Türschweller sowie gegebenenfalls einen Seitenwindfang. Insbesondere bei Pkw's vom Typ Kombi oder Van kann zusätzlich noch eine D-Säule in die Seitenwandgruppe integriert sein. In besonders bevorzugten Ausführungsvarianten enthält die Seitenwandgruppe eine A-, B- und C-Säule oder eine A-, B-, C-, und D-Säule.

Der faserverstärkte Kunststoff einer Seitenwandgruppe enthält einen Faservolumengehalt von 30-60% und vorzugsweise einen Faservolumengehalt von 40 - 50 %.

Als Verstärkungsfasern können insbesondere anorganische Fasern, wie Glasfasern, Kohlenstoff- oder Graphitfasern, Metallfasern (Draht), keramische Fasern oder Fasern aus Cellulosederivaten oder aus thermoplastischen Kunststoffen, wie z.B. Polyvinylchloride, Polyacrylonitrile, Polyacryle, Polyolefine, z.B. Polypropylen, Polyester, Polyamide oder Kunststofffasern bekannt unter Kevlar bzw. Aramid, etc., oder Naturfasern, wie faserartige Silikatminerale, Jute, Sisal, Hanf, Baumwolle, Ramiefasern, etc., oder Mischfasern davon verwendet werden.

Bevorzugt werden insbesondere Kohlenstofffasern bzw. Graphitfasern, zu welchen auch spezielle Modifikationen, wie beispielsweise HT (High Tenacity)-Fasern, HM (High Modulus)-Fasern, HST (High Strain and Tenacity)-Fasern oder IM (Intermediate Modulus)-Fasern, zählen. Die Kohlenstofffasem können zur Haftverbesserung mit dem Matrixmaterial oder andersweitig mit einem herkömmlichen Verfahren oberflächenbehandelt sein und beispielsweise einer Anoxidation unterzogen sein.

Die Fasern werden in Form von textilen Flächengebilden wie Vliese, nichtmaschenbildenden Systemen, wie Gewebe, uni- oder bidirektionale Gelege, Geflechte usw. oder maschenbildenden Systemen, wie Gestricke, Gewirke usw. verwendet. Bevorzugt werden hauptsächlich textile Flächengebilde aus gerichteten Fasern und insbesondere textile Gewebe zweckmässig aus Langfasern mit Faserlängen von vorzugsweise länger als 150 mm und insbesondere länger als 200 mm, wobei die Fasern bzw. Rovings zu Faserbündeln bzw.

Faserstränge von z.B. 1 - 5 mm Durchmesser zusammengefasst und die Faserbündel gegenseitig verwoben sind. Durch die Konzentration der einzelnen Fasern bzw. Rovings zu Bündeln können Seitenwandgruppen als Formteile mit hohen Faservolumengehalten im RTM (Resin Transfer Moulding) hergestellt werden, wobei ein einwandfreier Harzfluss im Formteil immer noch gewährleistet ist. Das Gewebe kann ein 1-1, 1-2, 1-3, 1-4, 1-5, usw. -Gewebe sein. D.h. die Schussfäden können jeweils 1, 2, 3, 4, 5 usw. Kettfäden wechselnd unter- resp. übergreifen. Die Faserorientierung ist vorzugsweise 0°/90°. Sie kann aber auch davon abweichen.

Da die eingesetzten textilen Flächengebilde bevorzugt sehr dicht und fest sind, d.h. ohne Verletzung der Faserstruktur nur schwer umbiegbar sind, werden diese zweckmässig, beispielsweise mit Hilfe einer automatischen Vorformanlage, zu sogenannten Vorformlingen oder Preforms aufbereitet, so dass beim Einbringen solcher Vorformlinge in das Werkzeug keine nennenswerte Umformungen des Textils mehr nötig sind.

Die Vorformlinge können beispielsweise in einem thermischen Tief- oder Streckziehprozess hergestellt werden, wobei die Flächengebilde mit einem Binder versehen sein können, welcher sich nach Abkühlen des Vorformlings verfestigt und diesen in Form hält. Die Fasern werden beim Umformprozess durch den Fasergleiteffekt und gegebenenfalls durch Dehnung der neuen Form angepasst.

Vorformlinge können jedoch auch in einem Webverfahren angefertigt werden, welches erlaubt, dreidimensionale Fasergebilde herzustellen. Die automatisierte Herstellung von Vorformlingen in Vorformanlagen gewährleistet niedrige Masstoleranzen sowie eine hohe Reproduzierbarkeit und einen hohen Automatisierungsgrad.

Zur Herstellung einer erfindungsgemässen Seitenwandgruppe werden vorzugsweise für die einzelnen Seitenwandabschnitte, d.h. für einzelne Bereiche in der Seitenwandgruppe, Vorformling-Abschnitte gefertigt. Zweckmässig werden für die A-, B-, C- und D-Säule sowie für den seitlichen Dachrahmen und den Türschweller je einzelne Vorformling-Abschnitte aus einem textilen Flächenstück gefertigt. Die Vorformling-Abschnitte stossen jeweils an den Knotenpunkten gegeneinander, wo sie beispielsweise durch Nähen oder eine andere Verbindungstechnik gegenseitig verbunden werden, oder wo übergreifende textile Flächengebilde, beispielsweise auch in Form von Vorformling-Abschnitten, eingelegt werden, welche eine gute Festigkeit und Zusammenhalt des fertigen Formteils bzw. der fertigen Seitenwandgruppe auch an den Knotenstellen bewirken.

Die Vorformling können beispielsweise halbschalenförmig hergestellt werden. In dieser Ausführung wird in einem ersten Verfahrensschritt die erste Vorformling-Halbschale in die Kavität eingelegt gefolgt von einem Schaumstoffkern oder Schmelzkern. Abschliessend wird eine zweite Vorformling-Halbschale darüber gelegt.

An besonders beanspruchten Seitenwandabschnitten der Seitenwandgruppe können zusätzliche Verstärkungen aus Fasern, d.h. insbesondere eine oder mehrere Lagen von textilen Flächengebilden, eingelegt werden. Es sind auch Kombinationen von verschiedenen Fasertypen möglich.

Die Vorformlinge können insbesondere in Seitenwandabschnitten, welche in einer tragenden Sandwichbauweise gefertigt sind, neben den beschriebenen textilen Flächengebilden noch weitere Schichten und Lagen aufweisen, wie beispielsweise weitere Fasergewebe mit unterschiedlicher Faserorientierung sowie Gelege oder Fasermatten, welche zweckmässig direkt am Stützkern des Sandwichelementes anliegen. Weiters kann der Vorformling an seiner nach aussen weisenden Oberfläche ein Deckvlies aufweisen, wodurch eine schönere Ausbildung der Oberfläche der Seitenwandgruppe erzielt wird.

Die Ausrichtung der Fasern in den Vorformlingen orientiert sich vorzugsweise an den Hauptbelastungsrichtungen der Zug- und Druckkräfte in den einzelnen Seitenwandabschnitten. Die Fasern sind insbesondere in den Seitenwandsäulen, im Dachrahmen sowie im Türschweller zweckmässig überwiegend in der Längsrichtung dieser Seitenwandabschnitte orientiert. Bei Verwendung von Geweben, insbesondere von 0°/90°-Geweben oder anderen textilen Flächengebilden aus gerichteten Fasern, fällt vorzugsweise jeweils eine Faserrichtung mit der Hauptbeanspruchungsrichtung, d.h. insbesondere mit der Hoch- und Längsachse, zusammen.

Als Matrixmaterialien können polymere Matrixsysteme auf der Basis von Thermo- oder Duroplasten eingesetzt werden, wobei in Anwendung eines RTM-Verfahrens vorzugsweise Duroplaste verwendet werden. Als Harzsysteme können sowohl Polymerisationsharze, wie ungesättige Polyestherharze (UP) oder Methacrylate und insbesondere Vinylestherharze (VE), als auch Polyadditions- oder Polykondensationsharze wie Epoxidharze, Phenolharze oder Polyimide, verwendet werden. Besonders bevorzugt werden Epoxidharzsysteme mit äusserst engen Toleranzen, d.h. sie weisen insbesondere beim Aushärten keine oder nur geringe Volumenänderungen, z.B. Schwund, auf. Epoxidharze weisen überdies geringe HC-Emissionen auf und sind somit ökologisch vorteilhaft.

Aufgrund der Grösse, der komplexen geometrischen Strukturen (Hohlkörper, Verzweigungen, Knotenpunkte, etc.) und des hohen Fasergehaltes bzw. der dichten und festen Textilien der Vorformlinge wird vorzugsweise ein niedrigviskoses, leicht injizierbares Epoxidharz mit Viskositäten von zweckmässig zwischen 100 und 500 mPa und bevorzugt zwischen 200 und 300 mPa verwendet. Dies gewährleistet eine gute Durchtränkung der dichten Textile, sowie ein guter Durchfluss durch das Formteil während des Injizierens.

Die erfindungsgemässe Seitenwandgruppe weist eine Höhe von beispielsweise 1,0 - 1,4 m, vorzugsweise von 1,1 - 1,3 m, eine Länge von beispielsweise 2,0 - 3,8 m, vorzugsweise von 2,3 - 3,5 m und eine Gesamtbreite von beispielsweise 5 - 50 cm, vorzugsweise von 0,35 - 0,45 m auf, wobei unter Gesamtbreite der Abstand zwischen den beiden die jeweils äussersten Flächenpunkte der Innen- und Aussenseite der Seitenwandgruppe berührenden Flächentangenten gemeint ist. Die Querschnittsbreiten der Sandwich- bzw. Hohlraumabschnitte betragen beispielsweise zwischen 3 und 15 cm, vorzugsweise zwischen 4 und 7 cm.

Die erfindungsgemässe Seitenwandgruppe ist vorzugsweise als Komplettteil in Endmass ohne zu Fügen und somit auch ohne Fügestellen im RTM-Verfahren gefertigt und erfordert nur noch eine geringe Nachbearbeitung, wobei sich die Nachbearbeitung im wesentlichen auf den Bereich vorgesehener Inserts und auf die Entfernung verwendeten Trennfilme beschränkt.

Die Seitenwandgruppe zeichnet sich durch die in einem Werkstück kombinierte Hohlprofilund Sandwichbauweise aus. Unter Sandwichbauweise ist in diesem Zusammenhang ein in seinem Querschnitt geschlossener Hohlkörper aus verstärktem Kunststoff zu verstehen, dessen Hohlraum partiell oder vollständig mit einem Stützkern von niedriger Dichte ausgefüllt ist. Der im gesamten Text verwendete Begriff "Sandwichbauweise" oder "Sandwichstruktur" bezieht sich jeweils auf die vorgenannte Definition.

Die in Sandwichbauweise gefertigten Seitenwandabschnitte der Seitenwandgruppe enthalten vorzugsweise einen Schaumstoffkern als Stützkern, welcher mit oben beschriebenen Fasergeweben, vorzugsweise in Form von Vorformlingen, und Matrixmaterial umhüllt ist. Diese Seitenwandabschnitte weisen eine höhere Steifigkeit bezüglich Verwindung und Durchbiegung auf. Der Schaumstoffkern ist zweckmässig flüssigkeitsundurchlässig und beispielsweise geschlossenzellig. Es können auch teilweise oder vollständig offenzellige Schaumstoffkerne verwendet werden, wobei diese jedoch an ihrer Oberfläche vorteilhaft flüssigkeitsdicht versiegelt bzw. abgedichtet sind. Vorzugsweise werden Schaumstoffe, insbesondere Hartschaumstoffe, aus Polyurethan (PUR), Polyvinylchlorid (PVC) oder aus Polyolefinen verwendet. Vorteilhaft werden bereits vollständig aufgeschäumte Schaumstoffkerne eingesetzt.

Die Schaumstoffkerne der Sandwichstrukturen weisen zweckmässig eine Dichte von 30 - 110 kg/m³, vorzugsweise von 60 - 80 kg/m³ und insbesondere von rund 70 kg/m³, auf. Die Schubbruchdehnung, d.h. die Dehnung des Werkstoffes unter Einwirkung von Schubkräften bis zum Bruch oder Trennen, beträgt wenigstens 30 %.

Die Wanddicken des Hohlkörpers aus Fasern und Matrixmaterial der Seitenwandgruppe im Bereich der Sandwichstruktur und der Hohlraumstruktur sind besonders gering und liegen im Bereich von 1,0 - 3,0 mm, insbesondere von 1,2 - 2,0 mm und zweckmässig von 1,3 - 1,7 mm. Die besonders bevorzugte Wanddicke liegt bei rund 1,5 mm. Im Bereich der Sandwichbauweise entsprechen die angegebenen Wanddicken entsprechend der Teildicke von der Aussenoberfläche bis zur Schaumstoffkernoberfläche.

Die Wanddickentoleranzen betragen weniger als 0,2 mm. Sie belaufen sich idealerweise auf rund 0,1 mm. Die geringen Toleranzen kommen unter anderem dank dem Einsatz von schwundarmen Matrixsystemen, d.h. von Matrixsystemen mit geringer Reaktionsschwindung, zustande. Die Reaktionsschwindung des verwendeten Epoxidharzes beträgt vorzugsweise weniger als 3%.

Die Seitenwandgruppe ist hoch beanspruchbar und weist ein sehr niedriges Gewicht aus, welches für eine Abmessung von Länge : Höhe : Breite = 3,4 m : 1,2 m : 0,4 m ungefähr 17 kg entspricht.

Die Seitenwandgruppe wird vorzugsweise in ihrem vorderen und besonderes hohen strukturellen Anforderungen ausgesetzten Bereichen bis über die B-Säule hinaus in Sandwichbauweise hergestellt. Der Übergang von der Sandwich- zur Hohlraumbauweise befindet sich möglichst in einen belastungsneutralen Bereich. In vorliegender Erfindung liegt dieser Übergangsbereich vorzugsweise zwischen B- und C-Säule im seitlichen Dachrahmen und im Türschweller.

In die Seitenwandgruppe können je nach Bedarf Anschlusspunkte z.B. zur Aufnahme von Sicherheitsgurten, Türschlösser, Türscharniere, Fensterbefestigungen, Fensteröffnungs- und Fensterschliessmechanik, Fensterscharniere, oder andere krafteinleitende Elemente in Form von Einlegeteilen bzw. Inserts aus Metall, Kunststoff oder Verbundwerkstoffen der vorstehenden Materialien integriert sein. Die Inserts können z.B. in die Vorformlinge eingelegt werden.

Die Hohlraumbauweise erlaubt im weiteren die Integration von Lüftungskanälen oder Speichern von Fluiden in die Seitenwandgruppe.

Weiters können an die Seitenwandgruppe optional weitere Teile angeklebt werden. So können beispielsweise Faserverbundrohre als strukturelle Querverbindungen und zur Abstützung der Instrumententafel vorne oder zur Abstützung der Sitzbank hinten in entsprechende Vertiefungen in der Seitenwandgruppe gefügt, vorzugsweise geklebt, werden. Die Seitenwandgruppe wird vorzugsweise über Klebeverbindungen mit den angrenzenden Bauteilen (Boden- und Dachgruppe, Heckabschluss, Kotflügel etc.) gefügt.

Auf der Fahrzeuginnenseite kann bedürfnisgerecht eine Innenverkleidung an die Seitenwandgruppe angebracht werden. Das Innenverkleidungsteil kann ein herkömmliches Verbundteil mit einem formstabilen Kern und einer energie-absorbierenden Polsterung aus Schaumstoffmaterial (z.B. PUR) sowie einer flexiblen Oberflächenschicht (z.B. aus PVCoder ABS-Folie) sein. Im weiteren können an den Verkleidungsteilen Befestigungselemente vorgesehen sein.

Ein bevorzugtes Verfahren zur Herstellung einer erfindungsgemässen Seitenwandgruppe zeichnet sich dadurch aus, dass die Seitenwandgruppe als Formteil in einem RTM-Verfahren (Resin Transfer Moulding) hergestellt wird, wobei Verstärkungsfasern in Form von textilen Flächengebilden als Vorformlinge, vorzugsweise in einer automatischen Vorformanlage, hergestellt und in die RTM-Werkzeugform gelegt werden, und im Bereich der Sandwichstrukturen ein oder mehrere Vorformlinge einen Schaumstoffkern umhüllen, und im Bereich der Hohlraumstrukturen ausschmelzbare Schmelzkerne eingelegt und mit einem oder mehreren Vorformlingen umhüllt werden, und nach Schliessen der Form ein Harz, insbesondere ein Epoxid-Harzsystem, in die Form injiziert wird und nach Abschluss des Injiziervorganges das Formteil gehärtet wird.

Bei der Anwendung eines klassischen RTM-Verfahrens werden im Bereich der vorgesehenen Sandwichstrukturen Schaumstoffkerne, zweckmässig bereits vollständig aufgeschäumte Schaumstoffkerne, zusammen mit den Faser-Vorformlingen in die Werkzeug-Kavität gelegt. Die Fixierung des Schaumstoffkerns erfolgt durch die Fasergebilde bzw. Vorformlinge. Die Schaumstoffkerne können auch bereits bei der Herstellung der Vorformlinge mitintegriert werden.

Die Oberfläche des Stützkernes verbindet sich vorzugsweise mit der angrenzenden Matrix, d.h. der eindringenden Harzmatrix, beispielsweise durch Verkleben, wodurch eine vorteilhafte Versteifung des Seitenwandabschnittes erreicht wird.

Zweckmässig werden Injektionsdrücke zwischen 2 und 20 bar, vorzugsweise zwischen 3 und 15 bar angewendet. Der Harzdurchfluss geschieht zweckmässig in Querstromfahrweise, wobei eine oder mehrere Injektionsdüsen ans Werkzeug angesetzt werden können. Um Luft aus den Faserzwischenräumen zu verdrängen und den Injizierprozess zu beschleunigen, können die Vorformlinge vor Prozessbeginn vorbenetzt werden. Das Harz wird vorzugsweise bei einer Temperatur von 60 bis 80° C in das geschlossene Werkzeug injiziert.

Der Wachskern wird zweckmässig während des Injiziervorganges durch die Reaktionswärme des Harzes und durch das gewärmte Werkzeug erwärmt und expandiert. Durch die temperaturbedingte Ausdehnung des Wachskerns wird ein von innen nach aussen quer zu den Faserlagen gerichteter Druck ausgeübt, wodurch die Fasern in die Harz-Matrix gedrückt und vollständig mit Harz getränkt werden. Unter anderem dank diesem Effekt können erfindungsgemässe Wandgruppen mit einem hohen Faseranteil hergestellt werden.

Ein modifiziertes Herstellungsverfahren des RTM, welches ebenfalls Anwendung finden kann, ist das sogenannte VARI (Vacuum-Assisted-Resin-Transfer-Moulding)-Verfahren, in welchem zusätzlich ein Unterdruck an die Kavität angelegt wird, um den Harzfluss zu unterstützen und die Gase aus der Kavität beschleunigt zu entfernen. Es muss hier jedoch gewährleistet sein, dass das Matrixmaterial wegen des Unterdrucks nicht zu Ausgasungen und somit zu Blasenbildungen neigt.

Die Werkzeugformen bestehen aus einem entsprechend geeigneten Metall oder Metalllegierung, beispielsweise aus Aluminium, Chrom, Chromstahl, Nickel, Teflon®, Nickel-Teflon®. Gegebenenfalls können sie auch aus Kunststoff oder Keramik bestehen. Die Werkzeugform bzw. Matrize ist vorzugsweise beheizbar. Als ausschmelzbarer Schmelzkern wird vorzugsweise ein Wachskern mit einem Schwundmass von weniger oder gleich 1 % verwendet.

Das Formteil wird nach Abschluss des Injiziervorganges zweckmässig in der Werkzeugform bei einer Reaktionstemperatur von rund 65°-85° C, vorzugsweise von 75°-80° C ausgehärtet und anschliessend entformt und bei einer Temper-Temperatur von 90°-120° C, vorzugsweise von 100°-110° C einem abschliessenden Aushärtungsprozess, dem sogenannten Tempern, unterzogen, wobei während dem Tempern der hohlraum-füllende Schmelzkern spätestens bei Erreichen der maximalen Temper-Temperatur äusgeschmolzen wird. Während des Tempems erhält das Formteil seine endgültigen mechanischen und optischen Eigenschaften.

Die Formbelegungszeit liegt vorteilhaft unter 20 Minuten, zweckmässig unter 10 Minuten und besonders bevorzugt um 7 Minuten oder weniger.

Weiters können zusätzliche Inserts bzw. Einlegeteile, insbesondere zur Krafteinleitung, beispielsweise aus Kunststoff oder aus Metall, insbesondere aus Stahl, Aluminium, Magnesium oder deren Legierungen direkt mit den Fasern bzw. Vorformlingen in die Form eingelegt werden. Durch die Integration der Einlegeteile in das Formteil während seiner Herstellung wird die Zahl der Nachbearbeitungsschritte weiters verringert.

Dank der erfindungsgemässen Bauweise, d.h. dank der integralen Kombination von Sandwich- und Hohlraumbauweise, kann ein ausgezeichneter Kompromiss bezüglich maximalen Leichtbaus und höchsten Struktureigenschaften erzielt werden.

Die erfindungsgemässe Seitenwandgruppe weist weiters den Vorteil auf, dass sie als Komplettteil ohne Fügen hergestellt wird und ein sehr geringes Gewicht aufweist. Weiters weisen die genannten Bauteile sehr dünne Wanddicken und dank des erfindungsgemässen Verfahrens äusserst enge Toleranzen auf. Die kombinierte Bauweise von Sandwich- und Hohlraumbauweise erlaubt es, das Bauteil an gezielten Stellen und Bereichen zu verstärken und zu versteifen ohne das Gesamtgewicht unnötig zu erhöhen. Zudem weist die Seitenwandgruppe eine hohe Geometriekomplexität und Funktionsintegration aus. Die Seitenwandgruppe weist überdies eine hervorragende thermische Dimensions- bzw. Formstabilität auf und liefert ausgezeichnete Werte bezüglich Crashverhalten bzw. Absorption von kinetischer Energie. Die Verletzungsgefahr durch den Aufprall von Körperteilen, z.B. des Kopfes, an der erfindungsgemässen Seitenwandgruppe ist zudem weitaus geringer als bei herkömmlichen Bauteilen.

Die Anwendung eines RTM-Verfahrens in der erfindungsgemässen Art erlaubt es, die Formbelegungszeit und somit die Herstellungszeit sehr klein zu halten und den Prozessablauf unter Reduktion der in Handarbeit auszuführenden Arbeitsschritte zu rationalisieren, was eine kostengünstige und serienmässige Herstellung erlaubt sowie zu einer hohen Reproduzierbarkeit und ausgezeichneten Bauteilqualität führt.

Der Energieaufwand zur Herstellung der erfindungsgemässen Seitenwandgruppen bzw. Formteile ist vergleichsweise gering. Die Verwendung der vorliegenden Seitenwandgruppe im Fahrzeugbau ist somit nicht nur aufgrund des durch die Gewichtsreduktion erzielten geringeren Treibstoffverbrauches sondern auch in Bezug auf ihre Herstellung eine ökologisch vorteilhafte Lösung.

Im folgenden wird die Erfindung anhand eines Beispiels und mit Bezug auf die beiliegenden Zeichnungen näher erläutert. Es zeigen:
- Fig. 1:: eine Seitenwandgruppe in Seitenansicht;
- Fig. 2:: eine weitere Seitenwandgruppe in perspektivischer Ansicht.

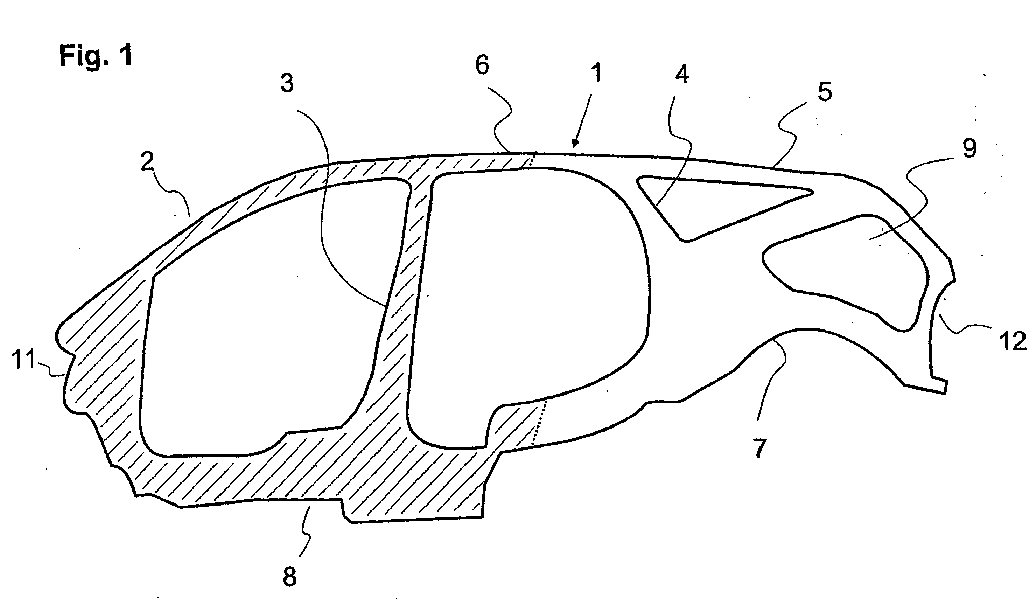

Die in Fig. 1 gezeigte Seitenwandgruppe 1 wurde als komplettes Formteil im RTM-Verfahren hergestellt. Die schraffierten Flächen zeigen die Bereiche an, in welchen die Seitenwandgruppe 1 in Sandwichbauweise hergestellt ist. Die Sandwichbauweise erstreckt sich vom vorderen Endabschnitt 11 inklusive A-Säule 2 bis in den Bereich zwischen B-Säule 3 und C-Säule 4 hinein. Die Übergangsbereiche von Sandwich- zu Hohlraumbauweise liegen in einem belastungsneutralen Bereich im Dachrahmen 6 und im Türschweller 8. Der daran anschliessende Seitenwandabschnitt ist bis hin zum hinteren Endabschnitt 12 inklusive D-Säule 5 in Hohlraumbauweise konstruiert. Der Zwischenraum 9 wird mit einem Abdeckelement, wie einem Faserverbundblech bzw. Organoblech, abgedeckt (nicht gezeigt). Im weiteren ist eine Radausnehmung 7 vorgesehen.

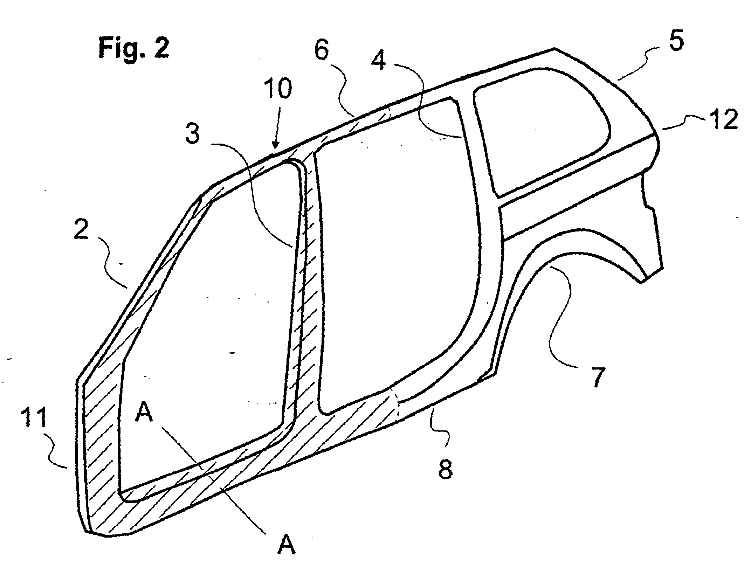

Fig. 2 zeigt eine weitere Ausführungsvariante einer Seitenwandgruppe 10, welche einen vorderen Endabschnitt 11, eine A-Säule 2, B-Säule 3, C-Säule 4, D-Säule 5, einen Türschweller 8, einen seitlichen Dachrahmen 6 sowie eine Radausnehmung 7 umfasst. Die Seitenwandgruppe 10 ist ebenfalls als Komplettteil im RTM-Verfahren hergestellt. Der Übergangsbereich von Sandwich- zu Hohlraumbauweise liegt auch hier zwischen der B-Säule 3 und der C-Säule 4 im seitlichen Dachrahmen 6 und im Türschweller 8. Dieser Übergangsbereich ist eine belastungsneutrale Zone in der Seitenwandgruppe 10. Die Querschnittsbreite der Seitenwandgruppe 10, d.h. die Breite des Rahmens in Orientierungsrichtung der Strecke A - A, liegt zwischen 3 cm und 7 cm.

## Patentansprüche

1. Wandgruppe für Personenkraftwagen, insbesondere Seitenwandgruppe wobei,
die Wandgruppe (1) ein Formteil mit faserverstärktem Kunststoff ist und die strukturell tragenden Wandabschnitte der Wandgruppe in Sandwichbauweise als ein teilweise oder vollständig mit einem Stützkern niedriger Dichte gefüllter Hohlkörper und die strukturell nicht-tragenden Wandabschnitte in Hohlraumbauweise als Hohlkörper gefertigt sind, **dadurch gekennzeichnet, dass** der faserverstärkte Kunststoff einen Faservolumengehalt zwischen 30% und 60% enthält, und die Verstärkungsfasern in form von textilen Flächengebilden vorliegen .

2. Wandgruppe nach Anspruch 1, **dadurch gekennzeichnet, dass** die Wandgruppe (1) als ungefügtes Komplettteil gefertigt ist.

3. Wandgruppe nach einem der Ansprüche 1 bis 2, **dadurch gekennzeichnet, dass** die Wandgruppe (1) eine Seitenwandgruppe (1) ist und eine A-Säule (2) sowie eine oder mehrere weitere Säulen, insbesondere eine B-Säule (3), C-Säule (4) und/oder D-Säule (5) enthält, und die Seitenwandgruppe (1) einen Dachrahmen (6) und einen Türschweller (8) enthält.

4. Wandgruppe nach Anspruch 1, **dadurch gekennzeichnet, dass** die Verstärkungsfasern als textile Flächengebilde mit gerichteten Fasern, und insbesondere als Gewebe vorliegen, und die textilen Flächengebilde aus Faserbündeln hergestellt sind.

5. Wandgruppe nach Anspruch 1, **dadurch gekennzeichnet, dass** der Hohlkörper der Wandgruppe (1) in der Sandwich- und in der Hohlraumbauweise kohlenstofffaserverstärkten Kunststoff mit einem schwundarmen Epoxid-Harzsystem enthält.

6. Wandgruppe nach Anspruch 1, **dadurch gekennzeichnet, dass** der Stützkern aus einem Schaumstoff, insbesondere aus einem Schaumstoff aus Polyurethan (PUR), Polyvinylchlorid (PVC) oder aus Polyolefinen, besteht.

7. Wandgruppe nach Anspruch 1, **dadurch gekennzeichnet, dass** der Faservolumengehalt des faserverstärkten Kunststoffes zwischen 40% und 50% liegt

8. Wandgruppe nach Anspruch 3, **dadurch gekennzeichnet, dass** die Seitenwandgruppe (1) von einem vorderen Endabschnitt (11) bis einschliesslich der B-Säule (3) in Sandwichbauweise gefertigt ist und die Sandwichbauweise im seitlichen Dachrahmen (6) und im Türschweller (8) zwischen B-Säule (3) und C-Säule (4) in eine Hohlraumbauweise übergeht und bis einschliesslich einem hinteren Endabschnitt (12) in Hohlraumbauweise ausgebildet ist.

9. Wandgruppe nach einem der Ansprüche 1 bis 2, **dadurch gekennzeichnet, dass** die Wanddicke des Hohlkörpers aus faserverstärktem Kunststoff zwischen 1,0 und 3,0 mm, insbesondere zwischen 1,2 - 2,0 mm und zweckmässig zwischen 1,3 bis 1, 7 mm liegt und die Wanddickentoleranzen weniger als 0,2 mm betragen.

10. ( Verfahren zur Herstellung einer Wandgruppe nach Anspruch 1, wobei
die Wandgruppe (1) als Formteil in einem RTM-Verfahren hergestellt wird, und im Bereich der Sandwichstrukturen ein oder mehrere Vorformlinge einen Schaumstoffkern umhüllen, und im Bereich der Hohlraumstrukturen ausschmelzbare Schmelzkerne eingelegt und mit einem oder mehreren Vorformlingen umhüllt werden, und nach Schliessen der Form ein Harz, insbesondere ein Epoxid-Harzsystem, in die Form injiziert wird und nach Abschluss des Injiziervorganges das Formteil gehärtet
wird, **dadurch gekennzeichnet, dass** Verstärkungsfasern in Form von textilen Flächengebilden als Vorformlinge, vorzugsweise in einer automatischen Vorformanlage, hergestellt und in die RTM-Werkzeugform gelegt werden.

11. Verfahren nach Anspruch 10, **dadurch gekennzeichnet, dass** die Wandgruppe (1) in der Werkzeugform bei einer Reaktionstemperatur von 65°-85° C, vorzugsweise von 75°-80° C, ausgehärtet und anschliessend entformt und bei einer Temper-Temperatur von 90°-120° C, vorzugsweise von 100°-110° C, einem abschliessenden Aushärtungsprozess unterzogen wird, wobei während des abschliessenden Aushärtungsprozesses der hohlraum-füllende Schmelzkern spätestens bei Erreichen der maximalen Temper-Temperatur ausgeschmolzen wird.

12. Verfahren nach einem der Ansprüche 10 bis 11, **dadurch gekennzeichnet, dass** die Formbelegungszeit der Wandgruppe (1) weniger als 20 Minuten, und vorzugsweise weniger als 10 Minuten beträgt.

13. Verfahren nach Anspruch 10, **dadurch gekennzeichnet, dass** die Wandgruppe (1) eine Seitenwandgruppe (1) ist und als Vorformlinge Vorformling-Abschnitte vorgefertigt und in die Werkzeuge eingelegt werden, wobei die Vorformling-Abschnitte die A-, B-, C-, und D-Säule, den seitlichen Dachrahmen und den Türschweller betreffen und aus den Vorformling-Abschnitten das Formteil (1) gefertigt wird.

14. Personenkraftwagen enthaltend eine oder mehrere, insbesondere zwei, Seitenwandgruppen gemäss Anspruch 1.

## Claims

1. Panel element for passenger cars, in particular side-panel element, in which the panel element (1) is a moulded part with fibre-reinforced plastic, the load-bearing sections of the panel element are produced as a sandwich construction in the form of a hollow part filled partially or completely with a low-density support core and the non-load-bearing sections are produced as a cavity construction in the form of hollow parts, **characterised in that** the fibre-reinforced plastic has a fibre volume content of between 30 % and 60 % and the reinforcing fibres are in the form of textile fabrics.

2. Panel element according to claim 1, **characterised in that** the panel element (1) is produced as one complete part without joins.

3. Panel element according to one of claims 1 to 2, **characterised in that** the panel element (1) is a side-panel element (1) and comprises an A-column (2), as well as one or more further columns, in particular a B-column (3), C-column (4) and/or D-column (5), and the side-panel element (1) comprises a roof frame (6) and a door sill (8).

4. Panel element according to claim 1, **characterised in that** the reinforcing fibres are in the form of textile fabrics with oriented fibres and, in particular, in the form of woven fabrics and the textile fabrics are produced from fibre bundles.

5. Panel element according to claim 1, **characterised in that** the hollow part of the panel element (1) contains carbon fibre-reinforced plastic with a low-shrinkage epoxy system in the sandwich construction and in the cavity construction.

6. Panel element according to claim 1, **characterised in that** the support core consists of a foam, in particular a foam made of polyurethane (PUR), polyvinyl chloride (PVC) or polyolefins.

7. Panel element according to claim 1, **characterised in that** the fibre volume content of the fibre-reinforced plastic is between 40 % and 50 %.

8. Panel element according to claim 3, **characterised in that** the side-panel element (1) is produced as a sandwich construction from a front end section (11) up to and including the B-column (3) and the sandwich construction changes to a cavity construction in the lateral roof frame (6) and in the door sill (8) between the B-column (3) and the C-column (4) and is designed as a cavity construction up to and including a rear end section (12).

9. Panel element according to one of claims 1 to 2, **characterised in that** the wall thickness of the hollow part made of fibre-reinforced plastic is between 1.0 and 3.0 mm, in particular between 1.2 and 2.0 mm and advantageously between 1.3 and 1.7 mm and the wall thickness tolerances are less than 0.2 mm.

10. Method of producing a panel element according to claim 1, in which the panel element (1) is produced in the form of a moulded part by an RTM process, one or more preforms surround a foam core in the region of the sandwich structures, meltable cores are inserted in the region of the cavity structures and are surrounded by one or more preforms, a resin, in particular an epoxy system, is injected into the mould once the mould has been closed and the moulded part is cured once the injection process is complete, **characterised in that** reinforcing fibres in the form of textile fabrics are produced as preforms, preferably in an automatic preforming unit, and are placed in the RTM mould.

11. Method according to claim 10, **characterised in that** the panel element (1) is cured in the mould at a reaction temperature of 65°-85°C, preferably 75°-80°C, and then removed from the mould and subjected to a final curing process at a tempering temperature of 90°-120°C, preferably 100°-110°C, the cavity-filling melting core being melted during the final curing process at the latest when the maximum tempering temperature has been reached.

12. Method according to one of claims 10 to 11, **characterised in that** the residence time of the panel element (1) in the mould is less than 20 minutes and preferably less than 10 minutes.

13. Method according to claim 10, **characterised in that** the panel element (1) is a side-panel element (1) and preform sections are prefabricated as preforms and inserted into the moulds, the preform sections relating to the A-, B-, C- and D- columns, the lateral roof frame and the door sill and the moulded part (1) being produced from the preform sections.

14. Passenger car comprising one or more, in particular, two side-panel elements according to claim 1.

## Revendications

1. Groupe de paroi pour voitures de tourisme, notamment groupe de paroi latéral, dans lequel le groupe de paroi (1) est une pièce moulée formée d'une matière plastique renforcée de fibres, et les éléments de paroi, qui sont porteurs structurellement, du groupe de paroi sont fabriqués selon une structure sandwich sous la forme d'un corps creux rempli en partie ou en totalité par un noyau de support de faible densité, et les éléments de paroi, qui ne sont pas porteurs structurellement, sont réalisés selon une réalisation à structure évidée sous la forme de corps creux, **caractérisé en ce que** la matière plastique renforcée par des fibres contient un pourcentage de fibres en volume compris entre 30 % et 60 % et les fibres de renfort sont présentes sous la forme de structures textiles planes.

2. Groupe de paroi selon la revendication 1, **caractérisé en ce que** le groupe de paroi (1) est réalisé sous la forme d'une pièce complète sans joint.

3. Groupe de paroi selon l'une des revendications 1 et 2, **caractérisé en ce que** le groupe de paroi (1) est un groupe de paroi latéral (1) et contient un montant A (2) ainsi qu'un ou plusieurs autres montants, notamment un montant B (3), un montant C (4) et/ou un montant D (5), et le groupe de paroi latéral (1) contient un cadre de toit (6) et un seuil de portière (8).

4. Groupe de paroi selon la revendication 1, **caractérisé en ce que** les fibres de renfort sont présentes sous la forme de structures textiles planes comportant des fibres orientées, et notamment sous la forme de tissus, et les structures textiles planes sont formées d'écheveaux de fibres.

5. Groupe de paroi selon la revendication 1, **caractérisé en ce que** le corps creux du groupe de paroi (1) contient, dans la réalisation sandwich et dans la réalisation à structure évidée, une matière plastique renforcée par des fibres de carbone comportant un système de résine époxy présentant une faible contraction.

6. Groupe de paroi selon la revendication 1, **caractérisé en ce que** le noyau de support est formé par un matériau mousse, notamment un matériau mousse en polyuréthane (PUR), en chlorure de polyvinyle (PVC) ou formé de polyoléfines.

7. Groupe de paroi selon la revendication 1, **caractérisé en ce que** la teneur volumique en fibres de la matière plastique renforcée par des fibres est comprise entre 40 % et 50 %.

8. Groupe de paroi selon la revendication 3, **caractérisé en ce que** le groupe de paroi latéral (1) est constitué par une section d'extrémité avant (11) jusqu'à et y compris le montant B (3), selon une structure sandwich, et la structure sandwich se prolonge, dans le cadre de toit latéral (6) et dans le seuil de portière (7) entre le montant B (3) et le montant C (4), par une structure évidée et est réalisée jusqu'à et y compris une section d'extrémité arrière (12), sous la forme d'une structure évidée.

9. Groupe de paroi selon l'une des revendications 1 et 2, **caractérisé en ce que** l'épaisseur de paroi du corps creux formée par une matière plastique renforcée par des fibres est comprise entre 1,0 et 3,0 mm, notamment entre 1,2 et 2,0 mm et de façon appropriée entre 1,3 et 1,7 mm et que les tolérances sur l'épaisseur de paroi sont inférieures à 0,2 mm.

10. Procédé pour fabriquer un groupe de paroi selon la revendication 1, selon lequel on réalise le groupe de paroi (1) sous la forme d'une pièce moulée selon un procédé RTM, et que dans la zone des structures sandwichs, une ou plusieurs préformes enveloppent un noyau en matériau mousse, et dans la zone des structures évidées, des noyaux fusibles sont insérés et sont remplis par une ou plusieurs préformes, et qu'après la fermeture du moule, on injecte une résine, notamment un système de résine époxy, dans le moule et on la fait durcir, et qu'à la fin de l'opération d'injection, on fait durcir la pièce moulée, **caractérisé en ce qu'**on fabrique des fibres de renfort sous la forme de structures textiles planes en tant que préformes de préférence dans une installation automatique de préformage et qu'on les place dans le moule pour le procédé RTM.

11. Procédé selon la revendication 10, **caractérisé en ce qu'**on fait durcir le groupe de paroi (1) dans le moule à une température de réaction de 65-85°C, de préférence de 75°-80°C et qu'ensuite on le démoule et on le soumet, à une température de recuit de 90°-120°C, de préférence de 100°-120°C, à un processus de durcissement final, auquel cas pendant le processus du durcissement final le noyau fusible remplissant la cavité fond au moins lorsque la température maximale de recuit est atteinte.

12. Procédé selon l'une des revendications 10 et 11, **caractérisé en ce que** la durée de séjour du groupe de paroi (1) dans le moule est inférieure à 20 minutes et de préférence est inférieure à 10 minutes.

13. Procédé selon la revendication 10, **caractérisé en ce que** le groupe de paroi (1) est un groupe de paroi latéral (1) et qu'il est préfabriqué en tant que préformes sous la forme de sections de préforme et que ces dernières sont insérées dans les outils, les sections de préforme concernant les montants A, B, C et D, le cadre latéral de toit et le seuil de portière et que la pièce moulée (1) est réalisée à partir des sections de préforme.

14. Voiture de tourisme contenant un ou plusieurs et notamment deux groupes de paroi latéraux selon la revendication 1.
